# EUROPEAN PATENT APPLICATION

(11) **EP 4 149 107 A1**
(43) Date of publication of application: **15.03.2023**
(21) Application number: 21800688.0
(22) Date of filing: 04.05.2021
(51) Int. Cl.: H04N 5/232, H04N 5/225, G03B 5/02, G03B 13/36

(54) **CAMERA ACTUATOR AND CAMERA DEVICE INCLUDING SAME**

(30) Priority: 06.05.2020 KR 20200053857
(71) Applicant: LG Innotek Co., Ltd., Seoul 07796 (KR)
(72) Inventor: LEE, Sung Guk, Seoul 07796 (KR); KWON, Jae Wook, Seoul 07796 (KR); OH, Jun Seok, Seoul 07796 (KR)
(74) Representative: M. Zardi & Co S.A.
(86) International application number: PCT/KR2021/005613
(87) International publication number: WO 2021/225358

(57) **Abstract**

An embodiment of the present invention provides a camera actuator comprising: a mover including an optical member for changing a path of incident light; a driving unit for moving the mover in a second direction or a first direction perpendicular to an optical axis direction; an output unit for outputting a control signal for moving the mover; a first position sensor for sensing position information in the second direction of the mover; an image sensor for receiving light having passed through the optical member to generate image information; and a calculation unit for calculating a rotational correction amount of the image information with reference to the optical axis direction with respect to the image information by using the position information in the second direction of the mover.

## Description

### CROSS-REFERENCE TO RELATED APPLICATION

This application claims priority to and the benefit of Korean Patent Application No. 10-2020-0053857, filed on 6 May 2020, the disclosure of which is incorporated herein by reference in its entirety.

### BACKGROUND

### 1. Field of the Invention

The present invention relates to a camera actuator and a camera device including the same.

### 2. Discussion of Related Art

Cameras are devices for taking pictures or videos of subjects and are mounted on portable devices, drones, vehicles, or the like. A camera device may have an image stabilization (IS) function of correcting or preventing the shake of an image caused by the movement of a user in order to improve the quality of the image, an auto focusing function of aligning a focal length of a lens by automatically adjusting an interval between the image sensor and a lens, and a zooming function of capturing a remote subject by increasing or decreasing the magnification of the remote subject through a zoom lens.

Meanwhile, a resolution of the image sensor increases as a pixel has a higher resolution, and thus a size of the pixel becomes smaller, and as the pixel is smaller, the amount of light received for the same time decreases. Therefore, as the camera has a higher resolution pixel, the image shake caused by hand shaking occurring when a shutter speed is decreased in a dark environment may more severely occur. As a representative image stabilization (IS) technique, there is an optical image stabilizer (OIS) technique of correcting a motion by changing a path of light.

According to the general OIS technique, the motion of the camera may be detected through a gyro sensor or the like, and a lens may be tilted or moved based on the detected motion, or a camera module including the lens and the image sensor may be tilted or moved. In order to tilt or move the lens or the camera module including the lens and the image sensor for OIS, it is necessary to additionally secure a space for tilting or moving around the lens or the camera module.

Meanwhile, an actuator for the OIS may be disposed around the lens. In this case, the actuator for the OIS may include actuators in charge of the tilting of two axes, that is, an X axis and a Y axis, perpendicular to a Z-axis direction which is an optical axis direction.

However, according to the needs of ultra-slim and ultra-small camera devices, there is a large space constraint for arranging the actuator for the OIS, and it may be difficult to secure a sufficient space where the camera module itself including the lens or the camera module including the lens and the image sensor may be tilted or moved for the OIS. In addition, as the camera has a higher resolution pixel, it is preferable that a size of the lens be increased to increase the amount of received light, and there may be a limit to increasing the size of the lens due to a space occupied by the actuator for the OIS.

In addition, when a zoom function, an AF function, and an OIS function are all included in the camera device, there is also a problem in that a OIS magnet and an AF or zoom magnet are disposed close to each other to cause magnetic field interference.

In addition, there is a problem such as noise generation by a position sensor including a Hall sensor for detecting a position or the like.

### SUMMARY OF THE INVENTION

The present invention is directed to providing a camera actuator for correcting image information using position information of a mover.

In addition, an embodiment may provide a camera actuator for providing more accurate noise reduction by adjusting a change in correction amount for position information according to a change in focal length of a lens.

In addition, as an embodiment, there may be provided a camera actuator applicable to an ultra-slim, ultra-small, and high-resolution pixel camera

An object of the embodiment is not limited thereto and will also include objects or effects which may be identified from configurations or embodiments.

A camera actuator according to an embodiment of the present invention may include a mover including an optical member for changing a path of incident light, a driving unit for moving the mover in a first direction or a second direction perpendicular to an optical axis direction, an output unit for outputting a control signal for moving the mover, a first position sensor for detecting position information in the second direction of the mover, an image sensor for receiving light passing through the optical member to generate image information, and a calculation unit for calculating a rotational correction amount of the image information based on the optical axis direction of the image information using the position information in the second direction of the mover.

The incident light may be incident in the first direction from the mover and output in the optical axis direction.

The optical member may be disposed to have an inclination which is not perpendicular to the first direction and the optical axis direction.

The optical member may be disposed to be inclined with respect to a plane formed by any one of the first direction and the optical direction and the second direction.

The optical member may be perpendicular to a plane formed by the first direction and the optical axis direction.

The camera actuator may further include at least one lens for moving in the optical axis direction, and the calculation unit may adjust a change in the rotational correction amount of the position information according to a change in focal length of the at least one lens.

The change in the rotational correction amount may increase when the focal length of the at least one lens increases and decrease when the focal length of the at least one lens decreases.

The camera actuator may further include a second position sensor for detecting the position information in the first direction of the mover.

The calculation unit may not reflect the position information to the rotational correction amount in the first direction of the mover.

A camera actuator according to an embodiment includes a mover including an optical member for changing a path of incident light, a driving unit for moving the mover in a first direction or a second direction perpendicular to an optical axis direction, an output unit for outputting a control signal for moving the mover, a second position sensor for detecting position information in the second direction of the mover, an image sensor for receiving light passing through the optical member to generate image information, and a calculation unit for calculating a rotational correction amount by which the image sensor is rotated about the optical axis direction using the position information in the second direction of the mover.

### BRIEF DESCRIPTION OF THE DRAWINGS

The above and other objects, features and advantages of the present invention will become more apparent to those of ordinary skill in the art by describing exemplary embodiments thereof in detail with reference to the accompanying drawings, in which:
FIG. 1 is a perspective view of a camera module according to an embodiment;
FIG. 2 is an exploded perspective view of a camera module according to the embodiment;
FIG. 3 is a cross-sectional view along line A-A' in FIG. 1;
FIG. 4 is an exploded perspective view of a first camera actuator according to the embodiment;
FIG. 5 is a perspective view of the first camera actuator according to the embodiment from which a shield can and a substrate are removed;
FIG. 6 is a cross-sectional view along line B-B' in FIG. 5;
FIG. 7 is a cross-sectional view along C-C' in FIG. 5;
FIG. 8 is a perspective view of a second camera actuator according to the embodiment;
FIG. 9 is an exploded perspective view of the second camera actuator according to the embodiment;
FIG. 10 is a cross-sectional view along D-D' in FIG. 8;
FIG. 11 is a cross-sectional view along line E-E' in FIG. 8;
FIG. 12 is a block diagram showing a configuration of the camera module according to the embodiment;
FIG. 13 is a block diagram of a control unit according to the embodiment;
FIG. 14 is a perspective view of a mover in the first camera actuator according to the embodiment;
FIG. 15 is a cross-sectional view of the first camera actuator according to the embodiment;
FIG. 16 is a view showing image information according to the movement of the mover in a second direction in the first camera actuator according to the embodiment;
FIG. 17 is a view for describing the image information in FIG. 16;
FIG. 18 is a view showing image information according to the movement of the mover in a first direction in the first camera actuator according to the embodiment;
FIG. 19 is a view for describing the image information in FIG. 18;
FIGS. 20 and 21 are views for describing an operation of the control unit of the camera module according to the embodiment to adjust a rotational correction amount according to second position information;
FIG. 22 is a view for describing the driving of a control unit according to another embodiment;
FIG. 23 is a flowchart of a method of driving the control unit according to the embodiment;
FIG. 24 is a perspective view of a mobile terminal to which a camera module according to an embodiment is applied; and
FIG. 25 is a perspective view of a vehicle to which the camera module according to the embodiment is applied.

### DETAILED DESCRIPTION OF EXEMPLARY EMBODIMENTS

Since the present invention may have various changes and have various embodiments, specific embodiments are illustrated and described in the accompanying drawings.

However, it should be understood that it is not intended to limit specific embodiments, and it should be understood to include all modifications, equivalents, and substitutes included in the spirit and scope of the present invention.

Terms including ordinal numbers such as second or first may be used to describe various components, but the components are not limited by the terms. The terms are used only for the purpose of distinguishing one component from another. For example, a second component may be referred to as a first component, and similarly, the first component may also be referred to as the second component without departing from the scope of the present invention. A term "and/or" includes a combination of a plurality of related listed items or any of a plurality of related listed items.

When a certain component is described as being "connected" or "joined" to another component, it is understood that it may be directly connected or joined to another component, but other components may also be present therebetween. On the other hand, when a certain component is described as being "directly connected" or "directly joined" to another component, it should be understood that other components are not present therebetween.

The terms used in the application are only used to describe specific embodiments and are not intended to limit the present invention. The singular expression includes the plural expression unless the context clearly dictates otherwise. In the application, it should be understood that terms such as "comprise" or "have" are intended to specify that a feature, number, step, operation, component, part, or combination thereof described in the specification is present, but does not preclude the possibility of the presence or addition of one or more other features, numbers, steps, operations, components, parts, or combinations thereof in advance.

Unless defined otherwise, all terms used herein, including technical or scientific terms, have the same meaning as commonly understood by those skill in the art to which the present invention pertains. Terms such as those defined in a commonly used dictionary should be construed as having a meaning consistent with the meaning in the context of the related art and should not be construed in an ideal or excessively formal meaning unless explicitly defined in the application.

Hereinafter, embodiments will be described in detail with reference to the accompanying drawings, and the same or corresponding components are given the same reference numerals regardless of the reference numerals, and overlapping descriptions thereof will be omitted.

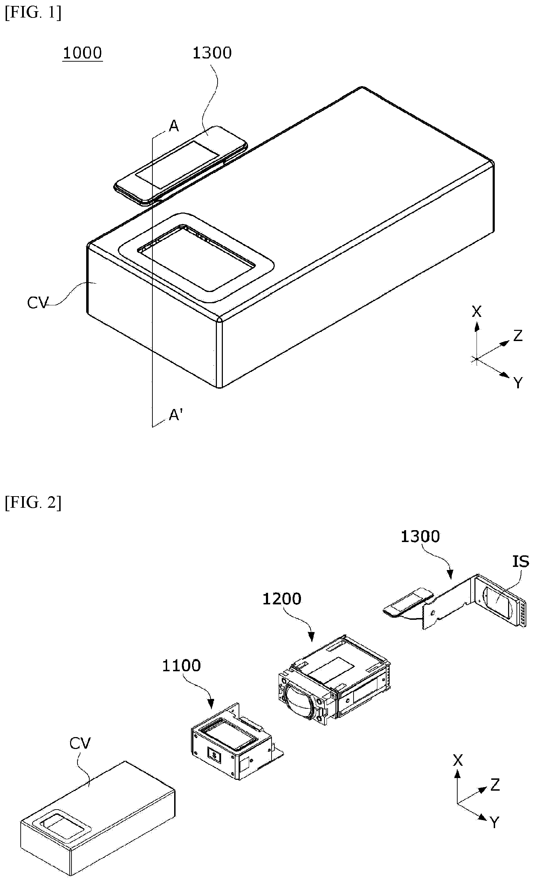

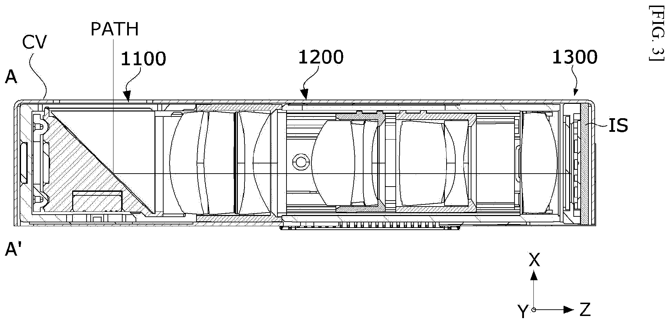

FIG. 1 is a perspective view of a camera module according to an embodiment, FIG. 2 is an exploded perspective view of a camera module according to the embodiment, and FIG. 3 is a cross-sectional view along line A-A' in FIG. 1.

Referring to FIGS. 1 and 2, a camera module 1000 according to the embodiment may include a cover CV, a first camera actuator 1100, a second camera actuator 1200, and a circuit board 1300. Here, the first camera actuator 1100 may be used interchangeably with a first actuator, and the second camera actuator 1200 may be used interchangeably with a second actuator.

The cover CV may cover the first camera actuator 1100 and the second camera actuator 1200. It is possible to increase a coupling force between the first camera actuator 1100 and the second camera actuator 1200 by the cover CV.

Furthermore, the cover CV may be made of a material which blocks electromagnetic waves. Therefore, it is possible to easily protect the first camera actuator 1100 and the second camera actuator 1200 in the cover CV.

In addition, the first camera actuator 1100 may be an optical image stabilizer (OIS) actuator.

The first camera actuator 1100 may include a lens. For example, the first camera actuator 1100 may include a fixed focal length lens disposed on a predetermined barrel (not shown). The fixed focal length lens may be referred to as a "single focal length lens" or a "single lens".

The first camera actuator 1100 may change a light path. In the embodiment, the first camera actuator 1100 may change the light path vertically through an optical member (e.g., a mirror or a prism) therein. With this configuration, even when a thickness of a mobile terminal is decreased, a configuration of a lens that is greater than the thickness of the mobile terminal is disposed in the mobile terminal through a change in the optical path so that magnification, auto focusing (AF) and OIS functions may be performed.

The second camera actuator 1200 may be disposed at a rear end of the first camera actuator 1100. The second camera actuator 1200 may be coupled to the first camera actuator 1100. In addition, mutual coupling may be performed by various methods.

In addition, the second camera actuator 1200 may be a zoom actuator or an AF actuator. For example, the second camera actuator 1200 may support one lens or a plurality of lenses and perform the AF function or the zoom function by moving the lenses according to a predetermined control signal of a control unit.

The circuit board 1300 may be disposed at a rear end of the second camera actuator 1200. The circuit board 1300 may be electrically connected to the second camera actuator 1200 and the first camera actuator 1100. In addition, a plurality of circuit boards 1300 may be provided.

The camera module according to the embodiment may be formed of a single module or a plurality of camera modules. For example, the plurality of camera modules may include a first camera module and a second camera module.

In addition, the first camera module may include a single actuator or a plurality of actuators. For example, the first camera module may include the first camera actuator 1100 and the second camera actuator 1200.

In addition, the second camera module may be disposed in a predetermined housing (not shown) and include an actuator (not shown) which may drive a lens unit. The actuator may be a voice coil motor, a micro actuator, a silicon actuator, or the like and applied in various methods, such as an electrostatic method, a thermal method, a bimorph method, and an electrostatic force method but is not limited thereto. In addition, in the specification, the camera actuator may be referred to as an actuator or the like. In addition, a camera module including a plurality of camera modules may be mounted in various electronic devices such as a mobile terminal.

Referring to FIG. 3, the camera module according to the embodiment may include the first camera actuator 1100 for performing the OIS function and the second camera actuator 1200 for performing the zooming function and the AF function.

Light may be incident into the camera module through an opening region positioned on an upper surface of the first camera actuator 1100. In other words, the light may be incident into the first camera actuator 1100 in an X-axis direction, and a light path may be changed in a vertical direction (e.g., a Z-axis direction) through the optical member. In addition, the light may pass through the second camera actuator 1200 and may be incident on an image sensor IS positioned at one end of the second camera actuator 1200 (PATH). Therefore, the optical axis direction may be the Z axis direction, which is an incident direction of light on the image sensor. For example, the optical axis may be a central axis of incident light, or hereinafter may correspond to the Z-axis direction in the drawing as a movement direction of light after being reflected through the optical member.

In addition, in the specification, a bottom surface refers to one side in the first direction. In addition, the first direction is the X-axis direction in the drawing and may be used interchangeably with the second axis direction or the like. The second direction is the Y-axis direction in the drawing and may be used interchangeably with the first axis direction. The second direction is a direction perpendicular to the first direction. In addition, the third direction is the Z-axis direction in the drawing and may be used interchangeably with the third axis direction. The direction is perpendicular to both the first direction and the second direction. Here, a third direction (Z-axis direction) corresponds to the direction of the optical axis, and the first direction (X-axis direction) and the second direction (Y-axis direction) are directions perpendicular to the optical axis and may be tilted by the first camera actuator. A detailed description thereof will be given below.

In addition, in the following description of the first camera actuator 1100 and the second camera actuator 1200, the optical axis direction is the third direction (Z axis direction) and will be described below based thereon.

In addition, with this configuration, the camera module according to the embodiment may reduce the spatial limitations of the first camera actuator and the second camera actuator by changing the light path. In other words, the camera module according to the embodiment may extend the light path while minimizing the thickness of the camera module in response to the change in the light path. Furthermore, it should be understood that the second camera actuator may provide a high range of magnification by controlling a focus or the like in the extended light path.

In addition, the camera module according to the embodiment may implement the OIS by controlling the light path through the first camera actuator, thereby minimizing the occurrence of a decent or tilt phenomenon and exerting the best optical characteristics.

Furthermore, the second camera actuator 1200 may include an optical system and a lens driving unit. For example, at least one of a first lens assembly, a second lens assembly, a third lens assembly, and a guide pin may be disposed in the second camera actuator 1200.

In addition, the second camera actuator 1200 may include a coil and a magnet and perform a high-magnification zooming function.

For example, a first lens assembly and a second lens assembly may be a moving lens for moving through the coil, the magnet, and a guide pin, and the third lens assembly may be a fixed lens, but the present invention is not limited thereto. For example, the third lens assembly may perform a function of a focator by which light forms an image at a specific position, and the first lens assembly may perform a function of a variator for re-imaging an image formed at the third lens assembly, which is the focator, at another position. Meanwhile, the first lens assembly may be in a state in which a magnification change is large because a distance to a subject or an image distance is largely changed, and the first lens assembly, which is the variator, may play an important role in the focal length or magnification change of the optical system. Meanwhile, imaging points of an image formed at the first lens assembly, which is the variator, may be slightly different depending on a position. Therefore, the second lens assembly may perform a position compensation function for the image formed by the variator. For example, the second lens assembly may perform a function of a compensator for accurately forming an image at an actual position of the image sensor using the imaging points of the image formed at the first lens assembly which is the variator. For example, the first lens assembly and the second lens assembly may be driven by an electromagnetic force due to the interaction between the coil and the magnet. The above description may be applied to a lens assembly to be described below.

Meanwhile, when the OIS actuator and the AF actuator or the zoom actuator are disposed according to the embodiment of the present invention, the magnetic field interference with the AF magnet or the zoom magnet can be prevented when the OIS is driven. Since a first driving magnet of the first camera actuator 1100 is disposed separately from the second camera actuator 1200, the magnetic field interference between the first camera actuator 1100 and the second camera actuator 1200 can be prevented. In the specification, the OIS may be used interchangeably with terms such as hand shaking correction, optical image stabilization, optical image correction, shake correction, and the like.

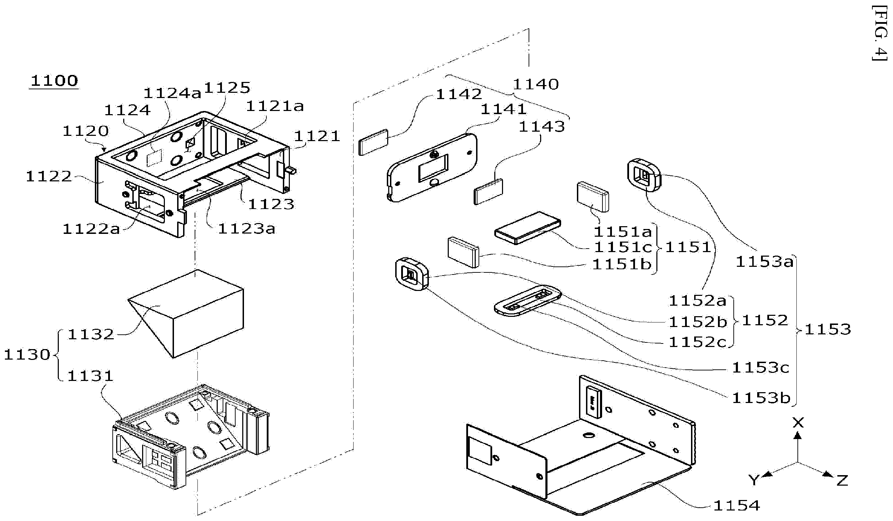

FIG. 4 is an exploded perspective view of the second camera actuator according to the embodiment.

Referring to FIG. 4, the first camera actuator 1100 according to the embodiment includes a first shield can (not shown), a first housing 1120, a mover 1130, a rotational unit 1140, and a first driving unit 1150.

The mover 1130 may include a holder 1131 and an optical member 1132 seated on the holder 1131. The mover 1130 may change the path of the incident light. In addition, the rotational unit 1140 includes a rotational plate 1141, a first magnetic substance 1142 having a coupling force with the rotational plate 1141, and a second magnetic substance 1143 positioned in the rotational plate 1141. In addition, the first driving unit 1150 includes a driving magnet 1151, a driving coil 1152, a Hall sensor unit 1153, and a first board unit 1154.

The first shield can (not shown) may be positioned on an outermost side of the first camera actuator 1100 and positioned to surround the rotational unit 1140 and the first driving unit 1150 to be described below.

The first shield can (not shown) may block or reduce electromagnetic waves generated from the outside. Therefore, it is possible to decrease the occurrence of a malfunction of the rotational unit 1140 or the first driving unit 1150.

The first housing 1120 may be positioned inside the first shield can (not shown). In addition, the first housing 1120 may be positioned inside the first board unit 1154 to be described below. The first housing 1120 may be fastened by being inserted or fitted into the first shield can (not shown).

The first housing 1120 may be formed of a plurality of housing side portions. The first housing 1120 may include a first housing side portion 1121, a second housing side portion 1122, a third housing side portion 1123, and a fourth housing side portion 1124.

The first housing side portion 1121 and the second housing side portion 1122 may be disposed to face each other. In addition, the third housing side portion 1123 and the fourth housing side portion 1124 may be disposed between the first housing side portion 1121 and the second housing side portion 1122.

The third housing side portion 1123 may be in contact with the first housing side portion 1121, the second housing side portion 1122, and the fourth housing side portion 1124. In addition, the third housing side portion 1123 may include a bottom surface as a lower portion of the first housing 1120.

In addition, the first housing side portion 1121 may include a first housing hole 1121a. A first coil 1152a to be described below may be positioned in the first housing hole 1121a.

In addition, the second housing side portion 1122 may include a second housing hole 1122a. In addition, a second coil 1152b to be described below may be positioned in the second housing hole 1122a.

The first coil 1152a and the second coil 1152b may be coupled to the first board unit 1154. In the embodiment, the first coil 1152a and the second coil 1152b may be electrically connected to the first board unit 1154 so that a current may flow. The current is a component of an electromagnetic force which may allow the second camera actuator to be tilted with respect to the X-axis.

In addition, the third housing side portion 1123 may include a third housing hole 1123a. A third coil 1152c to be described below may be positioned in the third housing hole 1123a. The third coil 1152c may be coupled to the first board unit 1154. In addition, the third coil 1152c may be electrically connected to the first board unit 1154 so that a current may flow. The current is a component of an electromagnetic force which may allow the second camera actuator to be tilted with respect to the Y-axis.

The fourth housing side portion 1124 may include a first housing groove 1124a. A first magnetic substance 1142 to be described below may be disposed in a region facing the first housing groove 1124a. Therefore, the first housing 1120 may be coupled to the rotational plate 1141 by a magnetic force or the like.

In addition, the first housing groove 1124a according to the embodiment may be positioned on an inner surface or outer surface of the fourth housing side portion 1124. Therefore, the first magnetic substance 1142 may be disposed to correspond to a position of the first housing groove 1124a.

In addition, the first housing 1120 may include an accommodating unit 1125 formed by the first to fourth housing side portions 1121 to 1224. The mover 1130 may be positioned in the accommodating unit 1125.

The mover 1130 includes the holder 1131 and the optical member 1132 seated on the holder 1131.

The holder 1131 may be seated on the accommodating unit 1125 of the first housing 1120. The holder 1131 may include outer surfaces of first to fourth prisms corresponding to the first housing side portion 1121, the second housing side portion 1122, the third housing side portion 1123, and the fourth housing side portion 1124, respectively.

A seating groove in which the second magnetic substance 1143 may be seated may be disposed on the outer surface of the fourth prism facing the fourth housing side portion 1124.

The optical member 1132 may be seated on the holder 1131. To this end, the holder 1131 may have a seating surface, and the seating surface may be formed by an accommodating groove. The optical member 1132 may include a reflecting unit disposed therein. However, the present invention is not limited thereto. In addition, the optical member 1132 may reflect light reflected from the outside (e.g., an object) into the camera module. In other words, the optical member 1132 can reduce the spatial limitations of the first camera actuator and the second camera actuator by changing the path of the reflected light. Therefore, it should be understood that the camera module may also provide a high range of magnification by extending the light path while minimizing its thickness. For example, the optical member 1132 may include a prism, a mirror, or the like.

The rotational unit 1140 includes a rotational plate 1141, a first magnetic substance 1142 having a coupling force with the rotational plate 1141, and a second magnetic substance 1143 positioned in the rotational plate 1141.

The rotational plate 1141 may be coupled to the mover 1130 and the first housing 1120 described above. The rotational plate 1141 may include an additional magnetic substance (not shown) positioned therein.

In addition, the rotational plate 1141 may be disposed adjacent to the optical axis. Therefore, the actuator according to the embodiment may easily change the light path according to first and second axis tilt to be described below.

The rotational plate 1141 may include a first protrusion disposed separately in the first direction (X-axis direction) and a second protrusion disposed separately in the second direction (Y-axis direction). In addition, the first protrusion and the second protrusion may protrude in opposite directions. A detailed description thereof will be given below.

In addition, the first magnetic substance 1142 may include a plurality of yokes, and the plurality of yokes may be positioned to face each other with respect to the rotational plate 1141. In the embodiment, the first magnetic substance 1142 may be formed of a plurality of yokes facing each other. In addition, the rotational plate 1141 may be positioned between the plurality of yokes.

The first magnetic substance 1142 may be positioned in the first housing 1120 as described above. In addition, as described above, the first magnetic substance 1142 may be seated on an inner surface or outer surface of the fourth housing side portion 1124. For example, the first magnetic substance 1142 may be seated in a groove formed in the outer surface of the fourth housing side portion 1124. Alternatively, the first magnetic substance 1142 may be seated in the first housing groove 1124a.

In addition, the second magnetic substance 1143 may be positioned on an outer surface of the mover 1130, particularly, the holder 1131. With this configuration, the rotational plate 1141 may be easily coupled to the first housing 1120 and the mover 1130 by a coupling force caused by an internal magnetic force between the second magnetic substance 1143 and the first magnetic substance 1142. In the present invention, positions of the first magnetic substance 1142 and the second magnetic substance 1143 may be moved to each other. For example, an attractive force or a repulsive force may act between the first magnetic substance 1142 and the second magnetic substance 1143. As for the attractive force, the attractive force between the first magnetic substance 1142 and the second magnetic substance 1143 may press the rotational plate 1141 between the holder and the housing. Therefore, a posture or position of the rotational plate 1141 may be maintained except for the X/Y tilts by the first driving unit 1150.

The first driving unit 1150 includes the driving magnet 1151, the driving coil 1152, the Hall sensor unit 1153, and the first board unit 1154.

The driving magnet 1151 may include a plurality of magnets. In the embodiment, the driving magnet 1151 may include a first magnet 1151a, a second magnet 1151b, and a third magnet 1151c.

Each of the first magnet 1151a, the second magnet 1151b, and the third magnet 1151c may be positioned on the outer surface of the holder 1131. In addition, the first magnet 1151a and the second magnet 1151b may be positioned to face each other. In addition, the third magnet 1151c may be positioned on a bottom surface of the outer surface of the holder 1131. A detailed description thereof will be given below.

The driving coil 1152 may include a plurality of coils. In the embodiment, the driving coil 1152 may include a first coil 1152a, a second coil 1152b, and a third coil 1152c.

The first coil 1152a may be positioned to face the first magnet 1151a. Therefore, the first coil 1152a may be positioned in the first housing hole 1121a of the first housing side portion 1121 as described above.

In addition, the second coil 1152b may be positioned to face the second magnet 1151b. Therefore, the second coil 1152b may be positioned in the second housing hole 1122a of the second housing side portion 1122 as described above.

The first coil 1152a may be positioned to face the second coil 1152b. In other words, the first coil 1152a may be positioned symmetrically with the second coil 1152b in the first direction (X-axis direction). This may also be applied to the first magnet 1151a and the second magnet 1151b in the same manner. In other words, the first magnet 1151a and the second magnet 1151b may be symmetrically positioned with respect to the first direction (X-axis direction). In addition, the first coil 1152a, the second coil 1152b, the first magnet 1151a, and the second magnet 1151b may be disposed to at least partially overlap one another in the second direction (Y-axis direction). With this configuration, the X-axis tilting may be accurately performed without inclination to one side by an electromagnetic force between the first coil 1152a and the first magnet 1151a and an electromagnetic force between the second coil 1152b and the second magnet 1151b.

The third coil 1152c may be positioned to face the third magnet 1151c. Therefore, the third coil 1152c may be positioned in the third housing hole 1123a of the third housing side portion 1123 as described above. The third coil 1152c may perform Y-axis tilting of the mover 1130 and the rotational unit 1140 with respect to the first housing 1120 by generating an electromagnetic force with the third magnet 1151c.

Here, the X-axis tilting refers to tilting with respect to the X-axis, and the Y-axis tilting refers to tilting with respect to the Y-axis.

The Hall sensor unit 1153 may include a plurality of Hall sensors. The Hall sensor corresponds to a "position sensor" to be described below and is used interchangeably therewith. Furthermore, the Hall sensor may be used as various terms, such as a position detecting sensor, a position detecting unit, and a position sensing unit. In the embodiment, the Hall sensor unit 1153 may include a first Hall sensor 1153a, a second Hall sensor 1153b, and a third Hall sensor 1153c.

The first Hall sensor 1153a may be positioned inside the first coil 1152a. In addition, the second Hall sensor 1153b may be disposed symmetrically with the first Hall sensor 1153a in the first direction (X-axis direction) and the third direction (Z-axis direction). In addition, the second Hall sensor 1153b may be positioned inside the second coil 1152b.

The first Hall sensor 1153a may detect a change in magnetic flux inside the first coil 1153a. In addition, the second Hall sensor 1153b may detect a change in magnetic flux in the second coil 1153b. Therefore, position sensing between the first and second magnets 1151a and 1151b and the first and second Hall sensors 1153a and 1153b may be performed. Therefore, the first Hall sensor 1153a and the second hall sensor 1153b the second camera actuator according to the embodiment may control the X-axis tilt.

In addition, the third Hall sensor 1153c may be positioned inside the third coil 1153c. The third Hall sensor 1153c may detect a change in magnetic flux inside the third coil 1153c. Therefore, position sensing between the third magnet 1151c and the third Hall sensor 1153c may be performed. Therefore, the second camera actuator according to the embodiment may control the Y-axis tilt.

The first board unit 1154 may be positioned under the first driving unit 1150. The first board unit 1154 may be electrically connected to the driving coil 1152 and the Hall sensor unit 1153. For example, the first board unit 1154 may be coupled to the driving coil 1152 and the Hall sensor unit 1153 by a surface mount technology (SMT). However, the present invention is not limited to this method.

The first board unit 1154 may be positioned between the first shield can (not shown) and the first housing 1120 and coupled to the shield can 1101 and the first housing 1120. The coupling method may be variously performed as described above. In addition, the driving coil 1152 and the Hall sensor unit 1153 may be positioned in an outer surface of the first housing 1120 through the coupling.

The first board unit 1154 may include a circuit board having a wiring pattern which may be electrically connected, such as a rigid printed circuit board (rigid PCB), a flexible PCB, and a rigid-flexible PCB. However, the present invention is not limited to this type.

A detailed description between the Hall sensor unit 1153 and the first board unit 1154 to be described below will be described below.

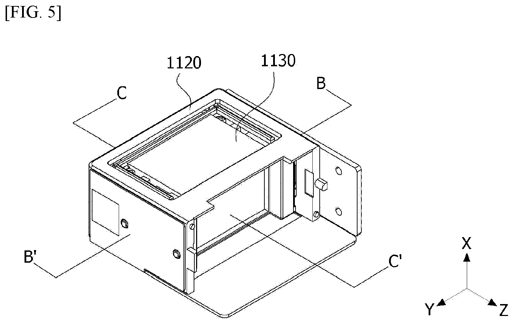

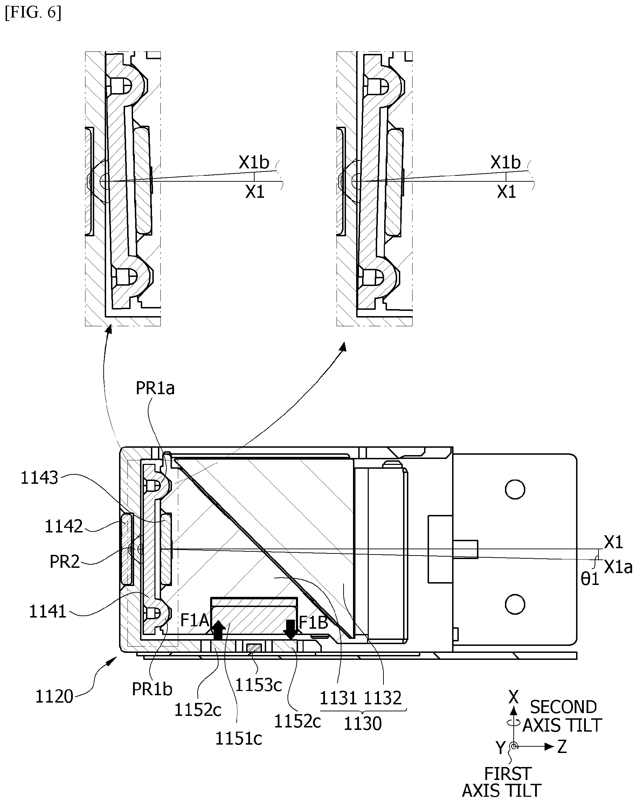

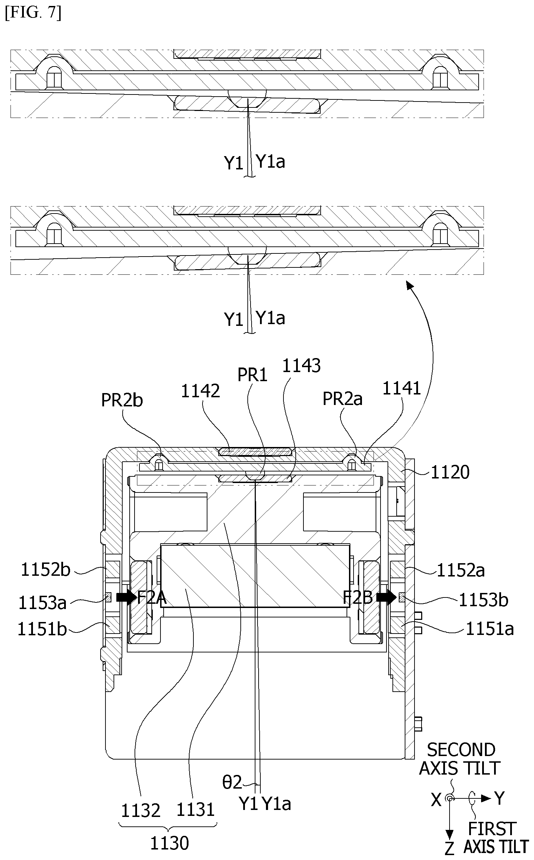

FIG. 5 is a perspective view of the first camera actuator according to the embodiment from which a shield can and a substrate are removed, FIG. 6 is a cross-sectional view along line B-B' in FIG. 5, and FIG. 7 is a cross-sectional view along C-C' in FIG. 5.

Referring to FIGS. 5 to 7, the first coil 1152a may be positioned on the first housing side portion 1121.

In addition, the first coil 1152a and the first magnet 1151a may be positioned to face each other. The first magnet 1151a may at least partially overlap the first coil 1152a in the second direction (Y-axis direction).

In addition, the first magnet 1151a may be positioned on the second housing side portion 1122 of the second coil 1152b. Therefore, the second coil 1152b and the second magnet 1151b may be positioned to face each other. The second magnet 1151b may at least partially overlap the second coil 1152b in the second direction (Y-axis direction).

In addition, the first coil 1152a and the second coil 1152b may overlap in the second direction (Y-axis direction), and the first magnet 1151a and the second magnet 1151b may overlap in the second direction (Y-axis direction). With this configuration, an electromagnetic force applied to the outer surface of the holder (the outer surface of the first holder and the outer surface of the second holder) may be positioned parallel to the second direction (Y-axis direction) and thus X-axis tilt may be accurately and precisely performed.

In addition, a first accommodating groove (not shown) may be positioned in an outer surface of the fourth holder. In addition, first protrusions PR1a and PR1b may be disposed in the first accommodating groove. Therefore, when the X-axis tilt is performed, the first protrusions PR1a and PRIb may serve as a reference axis (or rotational axis) of the tilt. Therefore, the rotational plate 1141 and the mover 1130 may move laterally.

The second protrusion PR2 may be seated in the groove of an inner surface of the fourth housing side portion 1124 as described above. In addition, when Y-axis tilt is performed, the rotational plate and the mover may rotate using the second protrusion PR2 serving as the reference axis of the Y-axis tilt.

According to the embodiment, the OIS may be performed by the first protrusion and the second protrusion. Furthermore, as a modified example, the first protrusion and the second protrusion may be disposed on opposite surfaces with respect to a base. In other words, the first protrusion may be disposed on any one of a first surface and second surface of the base. In addition, the second protrusion may be disposed on the other one of the first surface and second surface of the base.

Referring to FIG. 6, Y-axis tilt may be performed. In other words, the OIS may be implemented by the rotation in the first direction (X-axis direction).

In the embodiment, the third magnet 1151c disposed under the holder 1131 may form an electromagnetic force along with the third coil 1152c to tilt or rotate the mover 1130 in the first direction (X-axis direction).

Specifically, the rotational plate 1141 may be coupled to the first housing 1120 and the mover 1130 by the first magnetic substance 1142 in the first housing 1120 and the second magnetic substance 1143 in the mover 1130. In addition, the first protrusions PR1 may be spaced apart from each other in the first direction (X-axis direction) and supported by the first housing 1120.

In addition, the rotational plate 1141 may rotate or tilt using the second protrusion PR2 protruding toward the mover 1130 serving as the reference axis (or rotational axis). In other words, the rotational plate 1141 may perform the Y-axis tilt using the second protrusion PR2 serving as the reference axis.

For example, the OIS may be implemented while rotating (X1->X1b or X1a) the mover 1130 at a first angle θ₁ in the X-axis direction by first electromagnetic forces F1A and F1B between the third magnet 1151c disposed in a third seating groove and the third coil 1152c disposed on a third substrate side portion. The first angle θ₁ may be in the range of ±1° to ±3°. However, the present invention is not limited thereto.

Referring to FIG. 7, the X-axis tilt may be performed. In other words, the OIS may be implemented by the rotation in the second direction (Y-axis direction).

The OIS may be implemented as the mover 1130 tilts or rotates (or the X-axis tilt) in the Y-axis direction.

In the embodiment, the first magnet 1151a and the second magnet 1151b disposed in the holder 1131 form an electromagnetic force with the first coil 1152a and the second coil 1152b, respectively, to rotate or tilt the rotational plate 1141 and the mover 1130 in the second direction (Y axial direction).

The rotational plate 1141 may rotate or tilt (X-axis tilt) in the second direction using the first protrusion PR1 serving as the reference axis (or rotational axis).

For example, the OIS may be implemented while rotating (Y1->Y1a or Y1b) the mover 1130 at a second angle θ₂ in the Y-axis direction by second electromagnetic forces F2A and F2B between the first and second magnets 1151a and 1151b disposed in the first seating groove and the first and second coil units 1152a and 1152b disposed on the side portions of the first and second boards. The second angle θ₂ may be in the range of ±1° to ±3°. However, the present invention is not limited thereto.

As described above, the first actuator according to the embodiment may control the rotational plate 1141 and the mover 1130 to be rotated by the electromagnetic forces between the driving magnets in the holder and the driving coils disposed in the housing in the first direction (X-axis direction) or the second direction (Y-axis direction), thereby minimizing the occurrence of the decent or tilt phenomenon when the OIS is implemented and providing the best optical characteristics. In addition, as described above, the "Y-axis tilt" corresponds to the rotation or tilt in the first direction (X-axis direction) and the "X-axis tilt" corresponds to the rotation or tilt in the second direction (Y-axis direction).

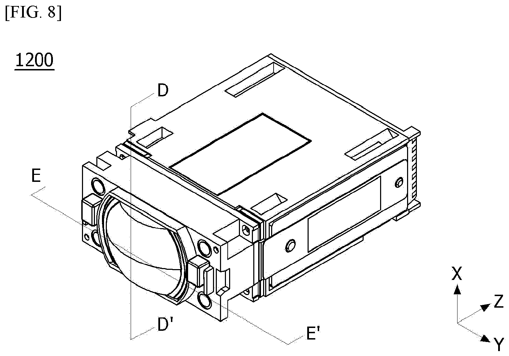

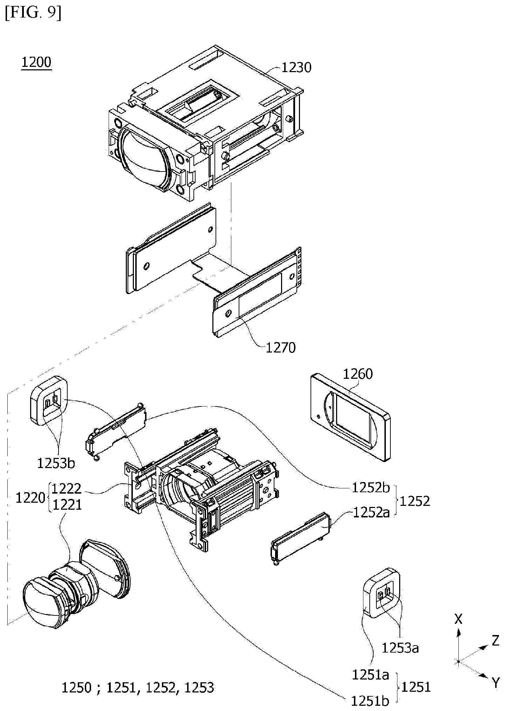

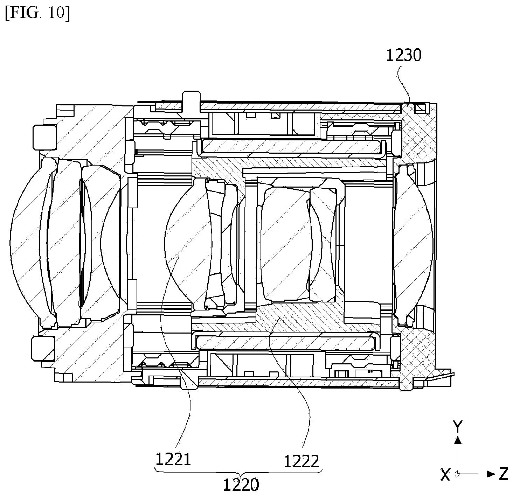

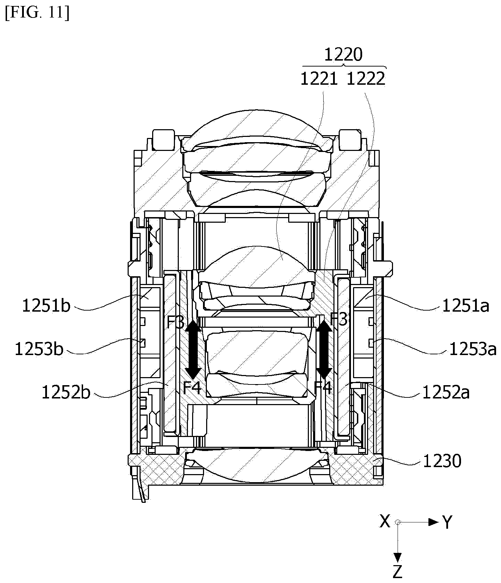

FIG. 8 is a perspective view of a second camera actuator according to the embodiment, FIG. 9 is an exploded perspective view of the second camera actuator according to the embodiment, FIG. 10 is a cross-sectional view along D-D' in FIG. 8, and FIG. 11 is a cross-sectional view along line E-E' in FIG. 8.

Referring to FIGS. 8 to 11, the second camera actuator 1200 according to the embodiment may include a lens unit 1220, a second housing 1230, a second driving unit 1250, a base unit (not shown), and a second board unit 1270. Furthermore, the second camera actuator 1200 may further include a second shield can (not shown), an elastic unit (not shown), and a bonding member (not shown). Furthermore, the second camera actuator 1200 according to the embodiment may further include an image sensor IS.

The second shield can (not shown) may be positioned in one region (e.g., an outermost side) of the second camera actuator 1200 and positioned to surround components (the lens unit 1220, the second housing 1230, the elastic unit (not shown), the second driving unit 1250, the base unit (not shown), the second board unit 1270, and the image sensor IS) to be described below.

The second shield can (not shown) may block or decrease electromagnetic waves generated from the outside. Therefore, the occurrence of a malfunction of the second driving unit 1250 may be decreased.

The lens unit 1220 may be positioned in the second shield can (not shown). The lens unit 1220 may move in the third direction (Z-axis direction). Therefore, the above-described AF function may be performed.

Specifically, the lens unit 1220 may include a lens assembly 1221 and a bobbin 1222.

The lens assembly 1221 may include at least one lens. In addition, a plurality of lens assemblies 1221 may be provided, but hereinafter, one lens assembly will be described as a reference.

The lens assembly 1221 may be coupled to the bobbin 1222 and may move in the third direction (Z-axis direction) by electromagnetic forces generated from a fourth magnet 1252a and a second magnet 1251b coupled to the bobbin 1222.

The bobbin 1222 may include an opening region surrounding the lens assembly 1221. In addition, the bobbin 1222 may be coupled to the lens assembly 1221 by various methods. In addition, the bobbins 1222 may include grooves in side surfaces thereof and may be coupled to the fourth magnet 1252a and the second magnet 1252b through the grooves. A bonding member or the like may be applied to the groove.

In addition, the bobbin 1222 may have elastic units (not shown) coupled at an upper end and rear end thereof. Accordingly, the bobbin 1222 may be supported by the elastic units (not shown) to move in the third direction (Z-axis direction). In other words, the bobbin 1222 may be maintained in the third direction (Z-axis direction) while its position is maintained. The elastic unit (not shown) may be formed of a leaf spring.

The second housing 1230 may be disposed between the lens unit 1220 and the second shield can (not shown). In addition, the second housing 1230 may be disposed to surround the lens unit 1220.

Holes may be formed in a side portion of the second housing 1230. A fourth coil 1251a and a fifth coil 1251b may be disposed in the holes. The holes may be positioned to correspond to the grooves of the bobbin 1222 described above.

The fourth magnet 1252a may be positioned to face the fourth coil 1251a. In addition, the second magnet 1251b may be positioned to face the fifth coil 1251b.

The elastic unit (not shown) may include a first elastic member (not shown) and a second elastic member (not shown). The first elastic member (not shown) may be coupled to an upper surface of the bobbin 1222. The second elastic member (not shown) may be coupled to a lower surface of the bobbin 1222. In addition, the first elastic member (not shown) and the second elastic member (not shown) may be formed of the leaf spring as described above. In addition, the first elastic member (not shown) and the second elastic member (not shown) may provide elasticity with respect to the movement of the bobbin 1222.

The second driving unit 1250 may provide driving forces F3 and F4 for moving the lens unit 1220 in the third direction (Z-axis direction). The second driving unit 1250 may include a driving coil 1251 and a driving magnet 1252.

The lens unit 1220 may move in the third direction (Z-axis direction) by the electromagnetic force formed between the driving coil 1251 and the driving magnet 1252. In this case, the lens unit 1220 may be formed of a plurality of lens assemblies and may move in the third direction (Z-axis direction) independently of or depending on each other by the second driving unit 1250.

The driving coil 1251 may include the fourth coil 1251a and the fifth coil 1251b. The fourth coil 1251a and the fifth coil 1251b may be disposed in holes formed in side portions of the second housing 1230. In addition, the fourth coil 1251a and the fifth coil 1251b may be electrically connected to the second board unit 1270. Therefore, the fourth coil 1251a and the fifth coil 1251b may receive a current or the like through the second board unit 1270.

The driving magnet 1252 may include the fourth magnet 1252a and the fifth magnet 1252b. The fourth magnet 1252a and the fifth magnet 1252b may be disposed in the grooves of the bobbin 1222 described above and may be positioned to correspond to the fourth coil 1251a and the fifth coil 1251b.

The base unit (not shown) may be positioned between the lens unit 1220 and the image sensor IS. A component such as a filter may be fixed to the base unit (not shown). In addition, the base unit (not shown) may be disposed to surround the image sensor IS. With this configuration, the image sensor IS may be free from foreign substances or the like, thereby improving the reliability of the image sensor.

In addition, the second camera actuator may be a zoom actuator or an AF actuator. For example, the second camera actuator may support one lens or a plurality of lenses and perform an AF function or a zooming function by moving the lenses according to a predetermined control signal of a control unit.

In addition, the second camera actuator may be a fixed zoom or a continuous zoom. For example, the second camera actuator may provide the movement of the lens assembly 1221.

In addition, the second camera actuator may be formed of a plurality of lens assemblies. For example, at least one of a first lens assembly (not shown), a second lens assembly (not shown), a third lens assembly (not shown), and a guide pin (not shown) may be disposed in the second camera actuator. The above description may be applied thereto. Therefore, the second camera actuator may perform a high-magnification zooming function through the driving unit. For example, the first lens assembly (not shown) and the second lens assembly (not shown) may be a moving lens for moving through the driving unit and a guide pin (not shown), and the third lens assembly (not shown) may be a fixed lens, but the present invention is not limited thereto. For example, the third lens assembly (not shown) may perform a function of a focator by which light forms an image at a specific position, and the first lens assembly (not shown) may perform a function of a variator for re-imaging the image formed at the third lens assembly (not shown), which is the focator, at another position. Meanwhile, the first lens assembly may be in a state in which a magnification change is large because a distance to a subject or an image distance is largely changed, and the first lens assembly, which is the variator, may play an important role in the focal length or magnification change of the optical system. Meanwhile, imaging points of an image formed at the first lens assembly (not shown), which is the variator, may be slightly different depending on a position. Therefore, the second lens assembly (not shown) may perform a position compensation function for the image formed by the variator. For example, the second lens assembly (not shown) may perform a function of a compensator for accurately forming an image at an actual position of the image sensor using the imaging points of the image formed at the first lens assembly which is the variator.

The image sensor IS may be positioned inside or outside the second camera actuator. In the embodiment, as shown, the image sensor IS may be positioned inside the second camera actuator. The image sensor IS may receive light and convert the received light into an electrical signal. In addition, the image sensor IS may have a plurality of pixels in the form of an array. In addition, the image sensor IS may be positioned on the optical axis.

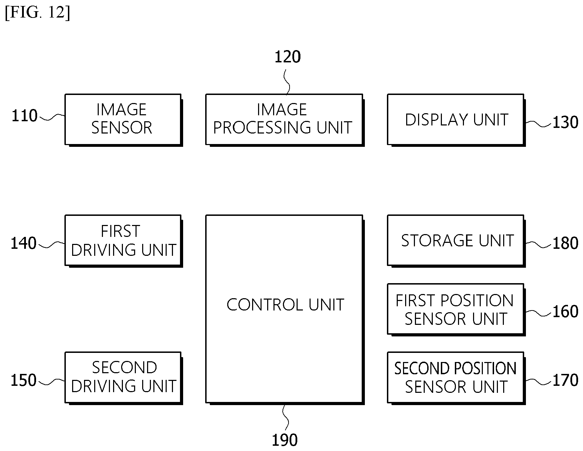

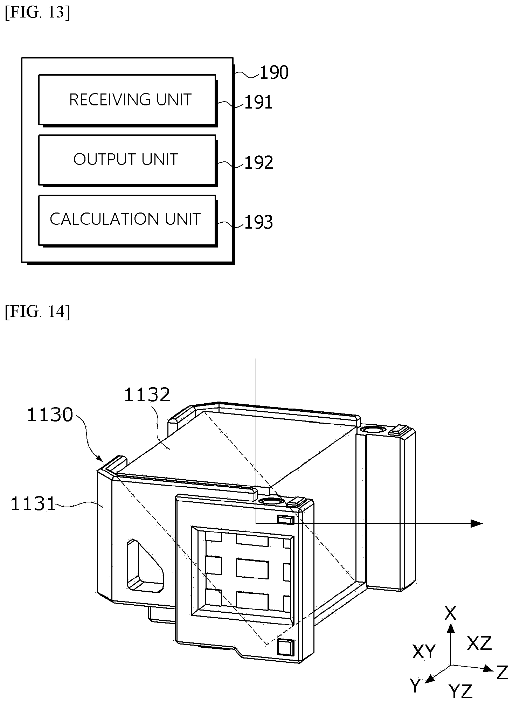

FIG. 12 is a block diagram showing a configuration of the camera module according to the embodiment, and FIG. 13 is a block diagram of a control unit according to the embodiment.

Referring to FIG. 12, the camera module may include an image sensor 110, an image signal processing unit 120, a display unit 130, a first driving unit 140, a second driving unit 150, a first position sensor unit 160, a second position sensor unit 170, a storage unit 180, and a control unit 190.

As described above, the image sensor 110 processes an optical image of a subject formed through the lens. To this end, the image sensor 110 may pre-process the image acquired through the lens. In addition, the image sensor 110 may convert the pre-processed image into electrical data and output the converted image.

The image sensor 110 corresponds to the image sensor IS. In addition, the image sensor 110 has a form in which a plurality of photo-detectors are integrated as each pixel and may convert image information of the subject into electrical data and output the converted image information. In the specification, the image information may be a concept including electrical data or a signal received as each pixel by a plurality of photo-detectors.

In the embodiment, the image sensor 110 accumulates the amount of input light and outputs an image, which is captured from the lens according to the accumulated light amount, according to a vertical synchronization signal. At this time, the image is acquired by the image sensor 110 for converting light reflected from the subject into an electrical signal. Meanwhile, a color filter is required to obtain a color image using the image sensor 110, and for example, a color filter array (CFA) filter may be adopted. The CFA filter passes only light representing one color per pixel, has a regularly arranged structure, and has one of various shapes depending on the arrangement structure.

The image signal processing unit 120 processes the image output through the image sensor 110 in a unit of a frame. In this case, the image signal processing unit 120 may also be referred to as an image signal processor (ISP).

In this case, the image signal processing unit 120 may include a lens shading compensation unit (not shown). The lens shading compensation unit is a block for compensating for a lens shading phenomenon in which the amounts of light at a center and edge region of the image appear differently and receives a lens shading setting value from the control unit 190 to be described below to compensate colors at the center and edge region of the image.

Furthermore, the lens shading compensation unit may receive shading variables set differently according to the type of lighting and also process the lens shading of the image according to the received variable. Therefore, the lens shading compensation unit may perform a lens shading process by differently applying a degree of shading according to the type of lighting. Meanwhile, the lens shading compensation unit may receive shading variables set differently according to an automatic exposure weight applied to a specific region of the image to prevent a saturation phenomenon occurring in the image and also process the lens shading of the image according to the received variable. More specifically, the lens shading compensation unit compensates for a change in the brightness occurring in an edge region of the image signal as the automatic exposure weight is applied to a center region of the image signal. In other words, when the image signal is saturated by lighting, the intensity of light decreases from the center to the outside in a concentric circle shape so that the lens shading compensation unit compensates the brightness compared to the center by amplifying an edge signal of the image signal.

Meanwhile, the image signal processing unit 120 may measure the sharpness of the image obtained through the image sensor 110. In other words, the image signal processing unit 120 may measure the sharpness of the image to check the focus accuracy of the image acquired through the image sensor 110. The sharpness may be measured for each image acquired according to a position of a focus lens.

The display unit 130 may display a captured image under the control of the control unit 190 to be described below and display a setting screen necessary for taking a picture or a screen for selecting a user's operation. In addition, the display unit 130 may also be positioned on the mobile terminal outside the camera module.

The first driving unit 140 may correspond to the first driving unit 1140 (see FIG. 4). In other words, the first driving unit 140 may perform the electromagnetic interaction between the first to third coils and the first to third magnets in response to the control signal received from the control unit 190. In addition, the OIS may be performed by the interaction. In other words, the first driving unit 140 may move the mover in the first direction (X-axis direction) or the second direction (Y-axis direction) perpendicular to the optical axis direction (third direction or Z-axis direction).

The second driving unit 150 may correspond to the second driving unit 1250 (see FIG. 8). In other words, the second driving unit 150 may perform the electromagnetic interaction between the fourth to fifth coils and the fourth to fifth magnets in response to the control signal received from the control unit 190. In addition, zooming or AF may be performed by the interaction. In other words, the second driving unit 150 may move the lens unit in the third direction (Z-axis direction). For example, the second driving unit 150 may move the focus lens in the optical axis direction.

The first position sensor unit 160 includes a plurality of Hall sensors of the first camera actuator described above, and thus detects the position of the mover or the optical member. In other words, the first position sensor unit 160 may detect the position of the first driving unit disposed on the mover. This is to control the position of the mover or the optical member (e.g., a prism or a mirror). In addition, the first position sensor unit 160 provides position data for moving the mover or the optical member.

The second position sensor unit 170 includes a plurality of Hall sensors of the second camera actuator described above, and thus detects a position of a lens unit 1220 (see FIG. 9). In other words, the second position sensor unit 170 may detect the position of the second driving unit adjacent to the lens unit 1220. This is to control the position of the lens unit. In addition, the second position sensor unit 170 provides position data for moving the lens unit.

The storage unit 180 stores data necessary for the camera module to operate. In the embodiment, information on a zoom position and a focus position for each distance to a subject may be stored in the storage unit 180. In other words, the focus position may be a position of the focus lens for accurately focusing the subject. In addition, the focus position may be changed according to the zoom position with respect to the zoom lens and the distance to the subject. Therefore, the storage unit 180 stores the zoom position according to the distance and data on the focus position corresponding to the zoom position.

In addition, the storage unit 180 may store an inclination of the camera module or information on a driving signal (e.g., a current) applied to the coil corresponding to the motion information to compensate for the inclination from the motion information.

The control unit 190 controls the overall operation of the camera module. In particular, the control unit 190 may control the first position sensor unit 160 and the second position sensor unit 170 to provide an OIS function, an AF function, and a magnification adjustment function.

In other words, the control unit 190 may receive the position information of the mover or the optical member through the first position sensor unit 160 and re-adjust the tilt amount of the mover using the position information. Preferably, the control unit 190 may use current position information of the mover or the optical member through the first position sensor unit 160 to move the mover or the optical member to a target position. In addition, when the current position information of the mover or the optical member is detected through the first position sensor unit 160, the control unit 190 may supply a control signal for moving the mover or the optical member to the target position with respect to a current position of the mover or the optical member to the first driving unit 140.

In addition, the control unit 190 may re-adjust the position of the lens unit by receiving the position information of the lens unit through the second position sensor unit 170. The control unit 190 may use current position information of the lens unit through the second position sensor unit 170 to move the lens unit to a target position.

In addition, when the current position of the lens unit is detected through the second position sensor unit 170, the control unit 190 may supply a control signal for moving the lens unit to the target position with respect to the current position of the lens unit to the second driving unit 150.

In other words, in the present invention, each of the first position sensor unit 160 and the second position sensor unit 170 may include a plurality of position sensors (corresponding to the above-described "Hall sensor"). In addition, the plurality of position sensors perform a detection operation at each installation position. In other words, the plurality of position sensors may detect the position of the mover, the position of the lens unit, and the like. At this time, in the present invention, each of the positions of the mover or the optical member and the lens unit may be detected using a differential signal of the detection signal acquired through a plurality of position sensors.

Furthermore, the first position sensor unit 160 may include the first position sensor for detecting the position information of the mover in the first direction (X-axis direction) and the second position sensor for detecting the position information of the mover in the second direction (Y-axis direction) as described in the first camera actuator. The first position sensor may correspond to the first and second Hall sensors described above, and the second position sensor may correspond to the third Hall sensor.

The control unit may calculate the rotational correction amount with respect to the optical axis direction (third direction or Z-axis direction) of the image information using the position information in the first direction (X-axis direction) of the mover.

Referring to FIG. 13, the control unit 190 may include a receiving unit 191, an output unit 192, and a calculation unit 193.

First, the receiving unit 191 may receive a control signal from the outside, for example, an application processor (AP) of a mobile terminal for OIS, AF, or zooming. For example, the mobile terminal may receive motion information from a gyro sensor and provide the control signal for moving the mover in the first direction or the second direction to the camera module to perform OIS using the motion information.

The receiving unit 191 may receive the position information of the mover (used interchangeably with "first position information") and the position information of the lens unit (used interchangeably with "second position information") from the first position sensor unit 160 and the second position sensor unit 170.

The receiving unit 191 may receive the first position information including the position information of the mover in the first direction (X-axis direction) from the first position sensor and the position information of the mover in the second direction (Y-axis direction) from the second position sensor from the first position sensor unit 160.

In addition, the receiving unit 191 may receive the second position information including the position information of the lens unit in the third direction (Z-axis direction) from the second position sensor unit 170.

The output unit 192 may output a driving signal for driving the first driving unit 140 and the second driving unit 150 in response to the control signal. In the embodiment, the driving signal may have information on a magnitude or direction of the current provided to the first coil to the third coil of the first driving unit 140. In addition, the driving signal may have information on a magnitude or direction of a current supplied to the fourth coil to the fifth coil of the second driving unit 150. In other words, moving directions or the moving amounts of the mover and the lens unit may be determined by the driving signal.

The calculation unit 193 may calculate the rotational correction amount about the third direction or the optical axis direction with respect to the image information using the first position information and the second position information received from the receiving unit 191. A detailed description thereof will be given below.

In the embodiment, the control unit 190 may receive each of the first position information and the second position information detected by a plurality of position sensors and detect the position of the mover, the optical member, or the second lens assembly.

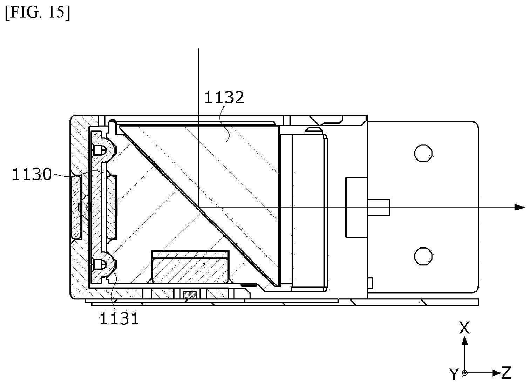

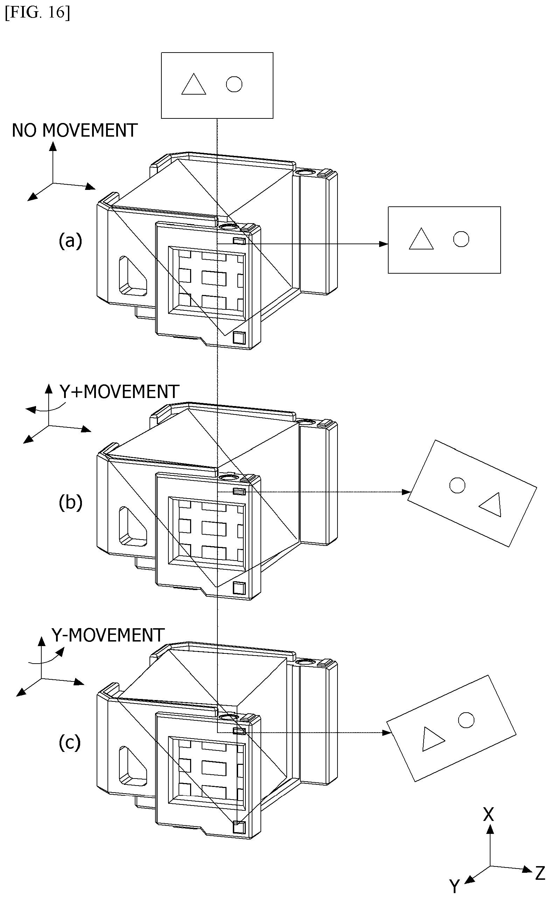

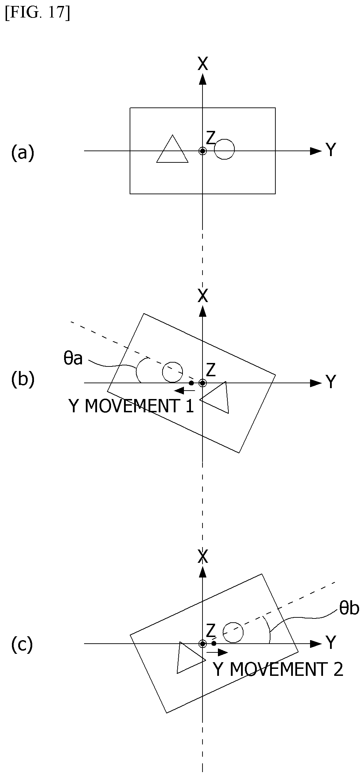

FIG. 14 is a perspective view of a mover in the first camera actuator according to the embodiment, FIG. 15 is a cross-sectional view of the first camera actuator according to the embodiment, FIG. 16 is a view showing image information according to the movement of the mover in a second direction in the first camera actuator according to the embodiment, and FIG. 17 is a view for describing the image information in FIG. 16.

Referring to FIGS. 14 and 15, the mover 1130 in the first camera actuator according to the embodiment may include the optical member 1132 for changing the light path and the holder 1131 for holding the optical member 1132 as described above. In this case, light may be incident in the first direction (X-axis direction) from the mover and reflected from the optical member 1132 to be output in the third direction (Z-axis direction) which is the optical axis direction.

In the embodiment, the optical member 1132 may have an inclination with respect to the optical axis direction (Z-axis direction or third direction) and one direction perpendicular to the optical axis direction. In the embodiment, the optical member 1132 may be positioned to have an inclination with respect to the first direction (X-axis direction). In addition, the optical member 1132 may be positioned to have an inclination with respect to the optical axis direction, that is, the third direction (Z-axis direction).

Alternatively, in another embodiment, the optical member 1132 may be positioned to have an inclination with respect to the second direction (Y-axis direction) and the optical axis direction. This will be described below with reference to the drawings.

In the embodiment, the optical member 1132 may be inclined with respect to planes formed by any one of the optical axis direction and the first direction (X-axis direction) and the second direction (Y-axis direction). For example, the optical member 1132 may be inclined with respect to planes formed by planes XY and YZ.

In addition, the optical member 1132 may be perpendicular to planes formed by the first direction (X-axis direction) and the optical axis direction (Z-axis direction). For example, the optical member 1132 may be perpendicular to the plane XZ.

In addition, in another embodiment, the optical member 1132 may be inclined with respect to planes formed in any one of the incident direction and the optical axis direction of light incident to the optical member and the incident direction (e.g., the first direction) and another direction (e.g., the second direction (Y-axis direction)) perpendicular to the optical axis direction.

Referring to FIGS. 16 and 17, the optical member according to the embodiment may be rotated (or tilted in the X-axis direction) about the first direction (X-axis direction) by the control unit. Alternatively, the optical member may be moved (or tilted in the X-axis direction) in the second direction (Y-axis direction) by the control unit.

At this time, when the optical member moves in the second direction (Y-axis direction), the image information (or the image) generated from the image sensor may move in the second direction (Y-axis direction) in response to the movement of the optical member in the second direction (Y-axis direction).

In the embodiment, when the optical member moves in the second direction (Y-axis direction) (b, Y+ movement), the image may move in a direction opposite to the second direction in response to the movement of the optical member (b, Y movement 1). In addition, when the optical member moves in the direction opposite to the second direction (Y-axis direction) (c, Y- movement), the image may move in the second direction in response to the movement of the optical member (c, Y movement 2).

In the embodiment, the image sensor will be described based on the first to third directions described in the structure of the camera module described above. Therefore, in X-axis and Y-axis camera actuators for the image, the X-axis and the Y-axis may correspond to the first direction (X-axis direction) and the second direction (Y-axis direction), respectively, and the Z-axis may correspond to the direction opposite to the third direction (Z-axis direction).

Alternatively, when the optical member moves in the second direction according to the function of the optical member, the structure of the lens, and the like, the image may also move in the same direction as the moving direction of the optical member.

However, the moving direction of the image may also be changed depending on a direction in which the optical member tilts with respect to the first direction (moves in the second direction or moves in the direction opposite to the second direction).

Additionally, when the optical member moves in the second direction (Y-axis direction), the image information (or the image) generated from the image sensor may rotate about the third direction (Z-axis direction) in response to the movement of the optical member in the second direction (Y-axis direction).

In the embodiment, when the optical member moves in the second direction (Y-axis direction), the image may move in the second direction in response to the movement of the optical member (C). In addition, when the optical member moves in the direction opposite to the second direction (Y-axis direction), the image may move in the direction opposite to the second direction in response to the movement of the optical member.

In other words, when the optical member moves in the second direction (Y-axis direction) or in the direction opposite to the second direction (Y-axis direction), the image or the image information may rotate about the third direction (Z-axis direction) at predetermined angles θₐ and θ_{b} (b and c). In the embodiment, when the optical member moves in the second direction (Y-axis direction), the control unit may calculate a rotational correction amount in which the image rotates counterclockwise (negative (-) rotation with respect to the Z-axis). In addition, when the optical member moves in the direction opposite to the second direction, the control unit may calculate a rotational correction amount in which the image rotates clockwise (positive (+) rotation with respect to the Z-axis). In other words, the control unit may calculate a rotational correction amount having a different direction with respect to the Z-axis direction depending on the position information of the optical member (whether the optical member moves in the second direction or in the direction opposite to the second direction).

In the embodiment, when detecting that the mover has moved in the second direction (Y-axis direction) from the first position information, the control unit may calculate a rotational correction amount in which compensation is made at the predetermined angles θₐ and θ_{b} in which the image has rotated about the third direction (Z-axis direction). The rotational correction amount may be a value corresponding to the predetermined angles θₐ and θ_{b}. The rotational correction amount may be transmitted to the image processing unit or an external mobile device. Therefore, it is also possible to minimize the correction for hand-shake and errors for the correction of hand-shake.

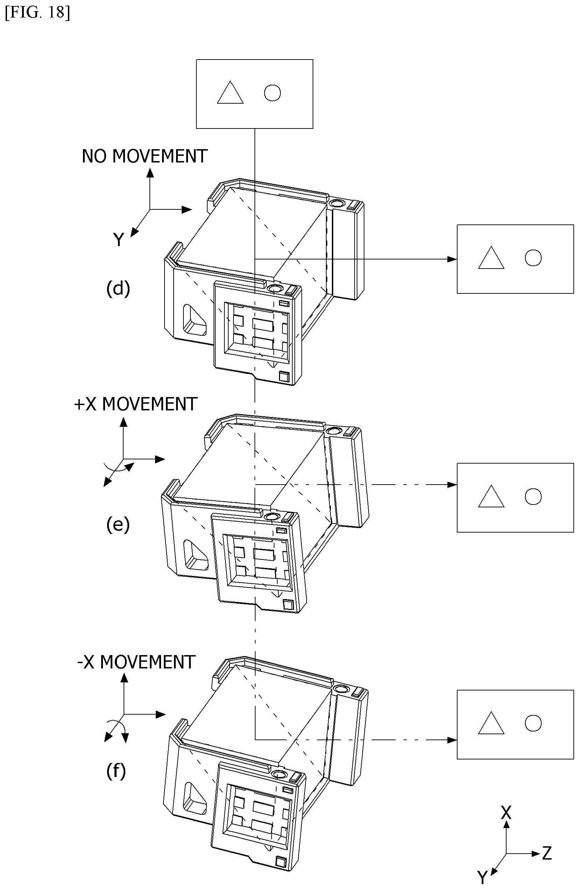

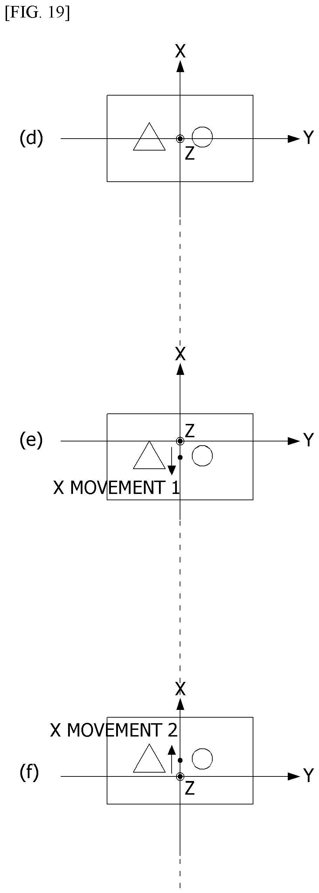

FIG. 18 is a view showing image information according to the movement of the mover in a first direction in the first camera actuator according to the embodiment, and FIG. 19 is a view for describing the image information in FIG. 18.

Referring to FIGS. 18 and 19, the optical member according to the embodiment may be rotated (tilted in the Y-axis direction) about the second direction (Y-axis direction) by the control unit. Alternatively, the optical member may be moved (tilted in the Y-axis direction) in the first direction (X-axis direction) by the control unit.

At this time, when the optical member moves in the first direction (X-axis direction), the image information (or the image) generated from the image sensor may move in the first direction (X-axis direction) in response to the movement of the optical member in the first direction (X-axis direction).

In the embodiment, when the optical member moves in the first direction (X-axis direction) (e, +X movement), the image may move in the direction opposite to the second direction in response to the movement of the optical member (e, X movement 1). In addition, when the optical member moves in the direction opposite to the first direction (X-axis direction) (f, -X movement), the image may move in the second direction in response to the movement of the optical member (f, X movement 2).

In addition, when the optical member moves in the first direction (X-axis direction), the image information (or the image) generated from the image sensor may not rotate about the third direction in response to the movement of the optical member in the first direction (X-axis direction).

In other words, the control unit may not reflect the position information in the first direction (X-axis direction) of the mover to the rotational correction amount even when receiving the position information from the second position sensor in the first direction (X-axis direction) of the mover.

More specifically, referring to the image information, when the optical member moves in the first direction (X-axis direction), the image may not rotate about the third direction (Z-axis direction).

Therefore, the control unit determines that the image does not rotate about the third direction (Z-axis direction) even when detecting that the mover has moved in the first direction (X-axis direction) from the first position information. Therefore, the control unit may calculate the rotational correction amount without applying the movement information in the first direction (X-axis direction) to the rotational correction amount.

In the embodiment, the control unit may calculate the rotational correction amount from only the position information in the second direction (Y-axis direction) of the mover. The rotational correction amount calculated therefrom may be transmitted to the image processing unit or the external mobile device. Therefore, it is also possible to minimize the correction for hand-shake and the errors for the correction of hand-shake.

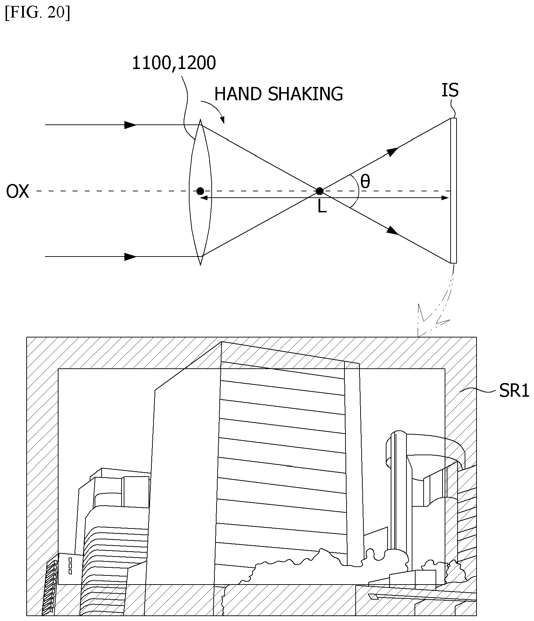

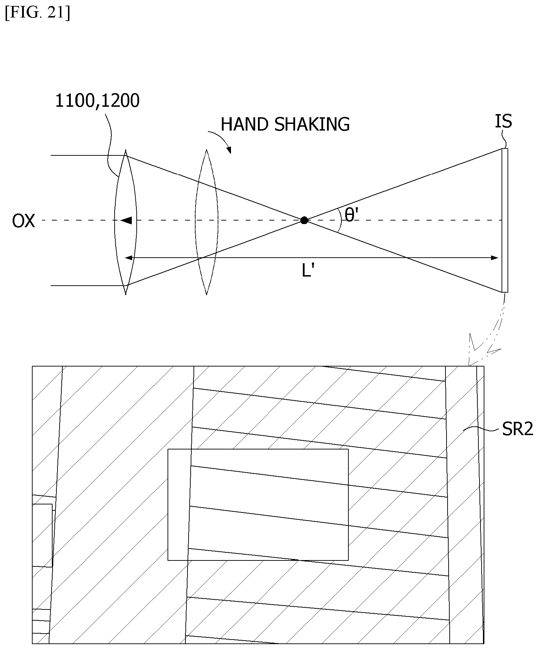

FIGS. 20 and 21 are views for describing an operation of the control unit of the camera module according to the embodiment to adjust the rotational correction amount according to the second position information.

First, as described above, the second camera actuator may include a lens unit for moving in the optical axis direction and including at least one lens.

Therefore, the calculation unit according to the embodiment may adjust the change in the rotational correction amount with respect to the position information of the mover according to the change in the focal length of the lens unit or at least one lens.

Referring to FIGS. 20 and 21, FIGS. 20 and 21 show a wide-angle state and a telephoto state according to the movement of the lens unit of the second camera actuator. In the drawings, FIG. 20 is the wide-angle state, and FIG. 21 is the telephoto state, and a description will be made based on these.

A focal length L formed by the lens units 1100 and 1200 and the image sensor IS in the wide-angle state may be greater than a focal length L' formed by the lens units 1100 and 1200 and the image sensor IS in the telephoto state. Here, the lens units 1100 and 1200 are the lens units of the second camera actuator or a single camera module, which will be described as a single configuration because a hand shaking simultaneously occurs, and also the correction to the hand shaking occurs.

In addition, an angle of view θ formed by the lens units 1100 and 1200 and the image sensor IS in the wide-angle state may be smaller than an angle of view θ' formed by the lens units 1100 and 1200 and the image sensor IS in the telephoto state.

In addition, when the lens units 1100 and 1200 are shaken by the user's hand shaking in the wide-angle state, the image formed on the image sensor IS has a first shaking region SR with respect to the total size or area of the image sensor IS.

When the lens units 1100 and 1200 are shaken by the user's hand shaking in the telephoto state, the image formed on the image sensor IS may have a second shaking region SR with respect to the total size or area of the image sensor IS.

When the user's hand shaking is the same (e.g., when the user's hand is shaken at a predetermined shaking angle), the first shaking region SR1 may be smaller than the second shaking region SR2. In other words, as the angle of view decreases, the shaking region due to the hand shaking may increase.

Therefore, the control unit according to the embodiment may increase the change in the rotational correction amount when the focal length of the at least one lens increases. In addition, the control unit according to the embodiment may decrease the change in the rotational correction amount when the focal length of the at least one lens decreases.

In other words, the control unit may adjust the increase or decrease in the rotational correction amount in response to the increase or decrease in the focal length. Therefore, as described above, when the focal length increases, the angle of view may decrease and the shaking region due to the hand shaking may increase.

Therefore, as described above, the control unit may accurately perform the correction to the shaking even when the amount of rotation about the third direction (Z-axis direction) of the image also increases according to the movement of the mover in the second direction (Y-axis direction) and the shaking region further increases as well. Therefore, the camera module according to the embodiment may more accurately correct the hand shaking.

Conversely, when the focal length decreases, the angle of view may increase and the shaking region due to the hand shaking may decrease. Therefore, as described above, since the amount of rotation about the third direction (Z-axis direction) of the image also decreases according to the movement of the mover in the second direction (Y-axis direction) and the shaking region further decreases as well, the control unit may accurately perform the correction to the shaking in response to the change in the shaking region. Therefore, the camera module according to the embodiment may provide an accurate image.

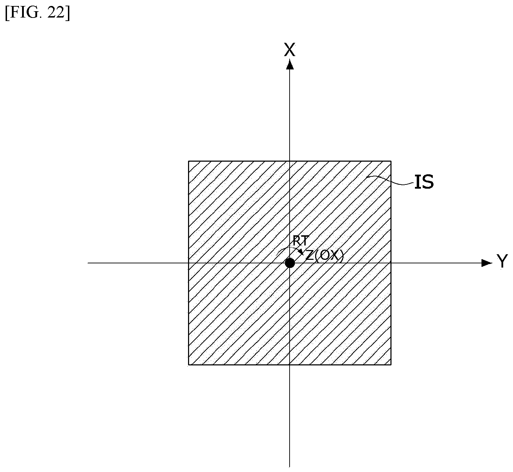

FIG. 22 is a view for describing the driving of a control unit according to another embodiment.

Referring to FIG. 22, a camera module according to another embodiment may include an image sensor, an image signal processing unit, a display unit, a first driving unit, a second driving unit, a first position sensor unit, a second position sensor unit, a storage unit, and a control unit.

In addition, the above-described contents may be applied to the image sensor, the image signal processing unit, the display unit, the first driving unit, the second driving unit, the first position sensor unit, the second position sensor unit, the storage unit, and the control unit in the same manner except for the following description.

In another embodiment, the control unit may receive each of first position information and second position information detected by a plurality of position sensors so that a position of a mover, an optical member, or a second lens assembly is detected based on the first position information and the second position information.

In addition, the control unit may calculate the rotational correction amount about an optical axis direction (third direction or Z-axis direction) of image information using position information in a first direction (X-axis direction) of the mover.

In addition, the control unit may calculate the rotational correction amount of the image sensor about the third direction or the optical axis direction with respect to the image information using the first position information and the second position information. In other words, the control unit may calculate the rotational correction amount RT for rotating the image sensor itself about the Z-axis direction or the optical axis OX direction.

Therefore, in another embodiment, the image sensor may rotate in the third direction (Z-axis direction), and a third driving unit (not shown) for rotation may be positioned in a region adjacent to the image sensor.

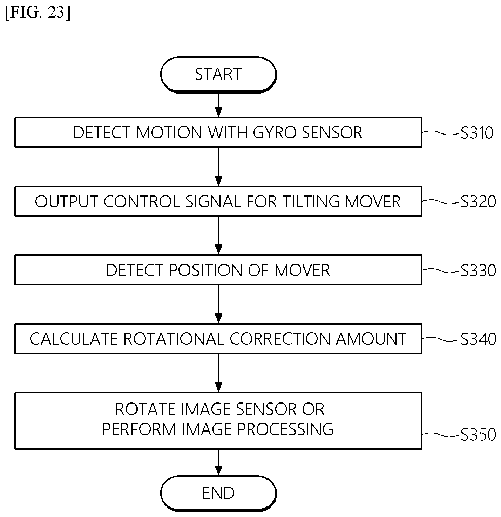

FIG. 23 is a flowchart of a method of driving the control unit according to the embodiment.

Referring to FIG. 23, the method of driving the control unit according to the embodiment may include detecting a motion with a gyro sensor (S310), outputting a control signal for tilting the mover (S320), performing a position detection of the mover (S330), calculating the rotational correction amount (S340), and rotating the image sensor or performing image processing (S350).

The gyro sensor may detect the motion (inclination or the like) of the camera module (S310). The control unit may receive inclination information of the camera module from the gyro sensor. The operation may be performed when the gyro sensor is positioned in the camera module, but the operation may be omitted when the gyro sensor is positioned outside the camera module.

In addition, the control unit may output the control signal for tilting the mover (S320). As described above, the control unit may move the mover in the first direction or a second direction in response to the motion information of the camera module. In other words, an OIS function may be performed.

In addition, the control unit may detect the position of the mover (S330). The control unit may detect the positions of the mover and the lens unit from a first position sensor unit and a second position sensor unit. In the embodiment, the control unit may detect the movement of the mover in the first direction or the second direction through the first position sensor unit and the second position sensor unit.

In addition, the control unit may calculate the rotational correction amount using the position information of the mover in the second direction (S340). The above-described contents may be applied to a description thereof in the same manner.

In addition, the control unit may rotate the image sensor or perform the image processing (S350).

In the embodiment, the control unit may rotate the image generated from the image sensor about the optical axis direction by the calculated rotational correction amount. Therefore, it is possible to compensate for errors rotated about the third direction (Z-axis direction) generated by the mover moving in the second direction (Y-axis direction). Therefore, it is possible to more accurately implement the OIS function.

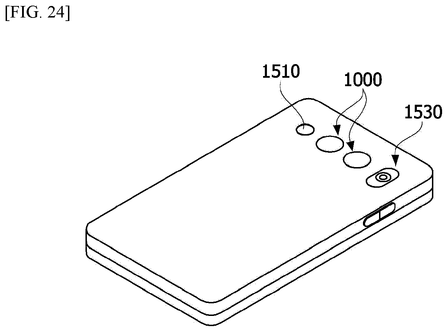

FIG. 24 is a perspective view of a mobile terminal to which the camera module according to the embodiment is applied.

Referring to FIG. 24, a mobile terminal 1500 in the embodiment may include a camera module 1000, a flash module 1530, and an AF device 1510 provided on a rear surface thereof.

The camera module 1000 may include an image capturing function and an AF function. For example, the camera module 1000 may include the AF function using an image.

The camera module 1000 processes an image frame of a still image or a moving image obtained by an image sensor in a capturing mode or a video call mode.

The processed image frame may be displayed on a predetermined display unit and stored in a memory. A camera (not shown) may also be disposed on a front surface of a body of the mobile terminal.

For example, the camera module 1000 may include a first camera module 1000 and a second camera module 1000, and the OIS may be implemented together with the AF or zoom function by the first camera module 1000A.

The flash module 1530 may include a light emitting device for emitting light therein. The flash module 1530 may be operated by a camera operation of the mobile terminal or a user's control.

The AF device 1510 may include one of packages of a surface light emitting laser device as a light emitting unit.

The AF device 1510 may include the AF function using a laser. The AF device 1510 may be mainly used in a condition in which the AF function using the image of the camera module 1000 is degraded, for example, in an environment in which a subject is close to 10 m or less or in a dark environment.

The AF device 1510 may include a light emitting unit including a vertical cavity surface emitting laser (VCSEL) semiconductor device and a light receiving unit for converting light energy into electrical energy, such as a photo-diode.

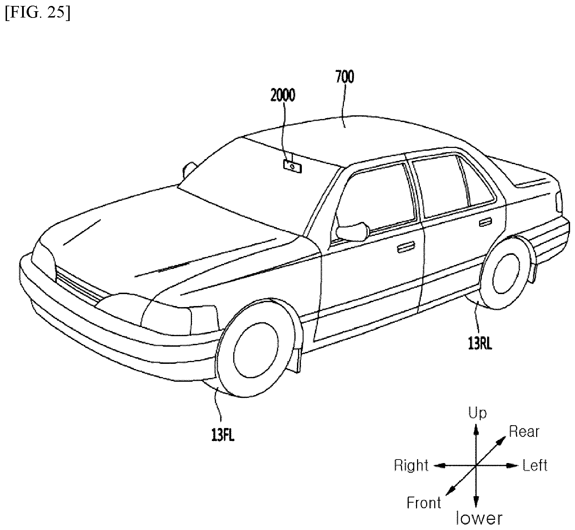

FIG. 25 is a perspective view of a vehicle to which the camera module according to the embodiment is applied.

For example, FIG. 25 is an external view of the vehicle including a vehicle driver assistance device to which the camera module 1000 according to the embodiment is applied.

Referring to FIG. 25, a vehicle 700 in the embodiment may include wheels 13FL and 13FR rotated by a power source and a predetermined sensor. The sensor may be a camera sensor 2000, but the present invention is not limited thereto.

The camera sensor 2000 may be a camera sensor to which the camera module 1000 according to the embodiment is applied. The vehicle 700 in the embodiment may acquire image information through the camera sensor 2000 for capturing a front image or a surrounding image, determine a situation in which a lane line is not identified using the image information, and generate a virtual lane line when the lane line is not identified.

For example, the camera sensor 2000 may acquire a front image by capturing a view in front of the vehicle 700, and a processor (not shown) may acquire image information by analyzing an object included in the front image.

For example, when objects, such as a median, a curb, or a street tree corresponding to a lane line, an adjacent vehicle, a traveling obstacle, and an indirect road mark, is captured in the image captured by the camera sensor 2000, the processor may detect the object and include the detected object in the image information. At this time, the processor may further supplement the image information by acquiring distance information to the object detected through the camera sensor 2000.

The image information may be information on the object captured in the image. The camera sensor 2000 may include an image sensor and an image processing module.

The camera sensor 2000 may process a still image or a moving image obtained by the image sensor (e.g., a complementary metal-oxide semiconductor (CMOS) or a charge-coupled device (CCD)).

The image processing module may process the still image or moving image acquired through the image sensor to extract necessary information and transmit the extracted information to the processor.

At this time, the camera sensor 2000 may include a stereo camera for improving the measurement accuracy of the object and further securing information such as the distance between the vehicle 700 and the object, but the present invention is not limited thereto.

According to an embodiment of the present invention, it is possible to implement a camera actuator for correcting image information using position information of a mover.

In addition, an embodiment may implement a camera actuator for providing more accurate noise reduction by adjusting a change in correction amount for the position information according to a change in focal length of a lens.

It is possible to provide a camera actuator applicable to ultra-slim, ultra-small, and high-resolution cameras. In particular, it is possible to efficiently dispose an actuator for OIS even without an increase in the overall size of a camera device.

According to an embodiment of the present invention, tilting in an X-axis direction and tilting in a Y-axis direction do not cause magnetic field interference with each other, it is possible to implement a stable structure for performing the tilting in the X-axis direction and the tilting in the Y-axis direction, and it is possible to achieve a precise OIS function because magnetic field interference with an AF or zooming actuator dos not occur either.

According to the embodiment of the present invention, it is possible to secure a sufficient amount of light by eliminating the size limitation of the lens and implement OIS with low power consumption.

Various and beneficial advantages and effects of the present invention are not limited to the above-described contents and will be more easily understood in the process of describing specific embodiments of the present invention.

Although embodiments have been mainly described above, these are only illustrative and do not limit the present invention, and those skilled in the art to which the present invention pertains will understand that various modifications and applications not exemplified above are possible without departing from the essential characteristics of the embodiments. For example, each component specifically shown in the embodiments may be implemented by modification. In addition, differences related to these modifications and applications should be construed as being included in the scope of the present invention defined in the appended claims.

## Claims

1. A camera actuator comprising:
a mover including an optical member for changing a path of incident light;
a driving unit configured to move the mover in a first direction or a second direction perpendicular to an optical axis direction;
an output unit configured to output a control signal for moving the mover;
a first position sensor configured to detect position information in the second direction of the mover;
an image sensor configured to receive light passing through the optical member to generate image information; and
a calculation unit configured to calculate a rotational correction amount of the image information based on the optical axis direction of the image information using the position information in the second direction of the mover.

2. The camera actuator of claim 1, wherein the incident light is incident in the first direction from the mover and output in the optical axis direction.

3. The camera actuator of claim 2, wherein the optical member is disposed to have an inclination which is not perpendicular to the first direction and the optical axis direction.

4. The camera actuator of claim 1, wherein the optical member is disposed to be inclined with respect to a plane formed by any one of the first direction and the optical direction and the second direction.

5. The camera actuator of claim 1, wherein the optical member is perpendicular to a plane formed by the first direction and the optical axis direction.

6. The camera actuator of claim 1, further comprising at least one lens configured to move in the optical axis direction,
wherein the calculation unit adjusts a change in the rotational correction amount of the position information according to a change in focal length of the at least one lens.

7. The camera actuator of claim 6, wherein the change in the rotational correction amount increases when the focal length of the at least one lens increases and decreases when the focal length of the at least one lens decreases.

8. The camera actuator of claim 1, further comprising a second position sensor configured to detect the position information in the first direction of the mover.

9. The camera actuator of claim 8, wherein the calculation unit does not reflect the position information to the rotational correction amount in the first direction of the mover.

10. A camera actuator comprising:
a mover including an optical member configured to change a path of incident light;
a driving unit configured to move the mover in a first direction or a second direction perpendicular to an optical axis direction;
an output unit configured to output a control signal for moving the mover;
a second position sensor configured to detect position information in the second direction of the mover;
an image sensor configured to receive light passing through the optical member to generate image information; and
a calculation unit configured to calculate a rotational correction amount by which the image sensor is rotated about the optical axis direction using the position information in the second direction of the mover.
